# EUROPÄISCHE PATENTSCHRIFT

(11) **EP 0 697 230 B1**
(45) Veröffentlichungstag und Bekanntmachung des Hinweises auf die Patenterteilung: **20.01.1999**
(21) Anmeldenummer: 95112648.1
(22) Anmeldetag: 11.08.1995
(51) Int. Cl.: B01D 1/06, B01D 1/22, F02B 3/06, F28F 13/02

(54) **Verfahren und Vorrichtung zur Verdampfungswärmeübertragung**
Method and apparatus for vapourization heat transfer
Procédé et dispositif pour la transmission de chaleur de vaporisation

(30) Priorität: 17.08.1994 DE 4430619
(43) Veröffentlichungstag der Anmeldung: 21.02.1996
(73) Patentinhaber: Kirschmann, Eduard, 30459 Hannover (DE)
(72) Erfinder: Kirschmann, Eduard, 30459 Hannover (DE)
(74) Vertreter: König, Norbert, Dipl.-Phys. Dr.

(56) Entgegenhaltungen:
- EP-A- 0 548 360
- EP-A- 0 567 393
- US-A- 3 241 598

## Beschreibung

Die Erfindung betrifft ein Verfahren und eine Vorrichtung zur Verdampfungswärmeübertragung.

Stand der Technik sind Filmverdampfungsanlagen verschiedener Geometrien, in denen man anstrebt, die Heizflächen mit einem geschlossenen, dünnen Film zu überziehen. Darüber hinaus erzeugt man in diesem Film oft unter Verwendung der Gravitation oder der Reibung gegenüber dem darüber strömenden Dampf eine Strömung entlang der Heizwand, die den Wärmeübergang verbessert. Wesentlich höhere Wärmeübergangsraten erhält man beim Blasensieden, doch ist hierfür eine deutlich höhere Überhitzung der Heizwand notwendig, womit ein höherer Exergieverbrauch verbunden ist.

Verdampfungsanlagen kommen zum Einsatz als Meerwasserentsalzungsanlagen, Anlagen zur Konzentration von Industrieabwässern, Destillationsanlagen, Anlagen zur Eindickung wäßriger Lösungen in der Lebensmittelindustrie usw.

Um die Wirtschaftlichkeit und Umweltverträglichkeit von Verdampfungsanlagen zu verbessern, muß in erster Linie die Wärmeübertragung verbessert werden.

Der Erfindung liegt die Aufgabe zugrunde, ein Verfahren und eine Vorrichtung zur Verdampfungswärmeübertragung so auszubilden, daß höhere Wärmeübertragungsraten bei geringer Überhitzung und bei sehr einfacher Bauweise erzielbar sind.

Diese Aufgabe wird verfahrensmäßig durch die Erfindung gemäß Anspruch 1 gelöst. Vorrichtungen zur Durchführung des Verfahrens sind in den Ansprüchen 8 und 13 angegeben.

Vorteilhafte und zweckmäßige Weiterbildungen der erfindungsgemäßen Aufgabenlösung sind in den Unteransprüchen angegeben.

Die Erfindung schlägt ein Verfahren und eine Vorrichtung vor, bei dem/der zwischen Dampfblasen und einer Wärmetauscherwandung ein größerer dünner Flüssigkeitsfilm mit eingeprägter Strömung entlang der Wandung aufgebaut wird und überdies durch die Bewegung der Dampfblasen eine Konvektion und Durchmischung der Flüssigkeit erreicht wird. Hierdurch werden höhere Übertragungsraten als bei den herkömmlichen Vorrichtungen erzielt.

Bei der erfindungsgemäßen Ausbildung wird der Abstand zwischen zwei einen Spaltraum begrenzenden Wärmetauscherwandungen so klein gewählt, daß sich in diesen Spaltraum hineinbewegende Blasen deformieren, wodurch sich deren Oberfläche und damit die Oberfläche der sie umgebenden Flüssigkeit erhöht. Gegen die Oberflächenspannung muß dabei Arbeit geleistet werden. Umgekehrt hat jede Dampfblase die Tendenz, ihre Oberfläche zu minimieren und Kugelform anzunehmen. Durch die Oberflächenspannung wird ein zusätzlicher Druck auf die Flüssigkeitsschicht ausgeübt, die sich zwischen der Blase und der Wand befindet. Diese Flüssigkeit weicht dann seitlich aus. Da die den Spaltraum begrenzenden Wände ein Gefälle aufweisen, bewegt sich die Blase zwischen ihnen aufwärts. Dabei wird die Blase von der Flüssigkeit seitlich umflossen, und zwischen der Blase und den Wänden wird ein dünner Flüssigkeitsfilm erzeugt, der aber auch nicht statisch ist, vielmehr versucht die Flüssigkeit aufgrund des durch die Oberflächenspannung erzeugten Überdruckes seitlich auszuweichen. Es wird also im Flüssigkeitsfilm eine Konvektion erzwungen. Thermodynamisch liegen hier lokal sehr gute Bedingungen für Wärmeleitung vor. Die Nutzung der Oberflächenspannung führt dazu, daß die Flüssigkeit zwischen der Dampfblase und den Wärmetauscherwänden auseinandergepreßt wird, was sowohl für eine gute Konvektion als auch lokal für einen wesentlich dünneren Flüssigkeitsfilm sorgt. Durch das Wechselspiel zwischen den Dampfblasen und den Wärmetauscherwänden wird eine bedeutende Verbesserung der Wärmeleitung erreicht.

Werden die Wärmetauscherwände beheizt, so erhält man einen ausgesprochen leistungsfähigen Verdampfer. Die Blasenoberfläche stellt eine Verdampfungsoberfläche in unmittelbarer Nähe der Heizwände dar. Der dünne Flüssigkeitsfilm mit erzwungener Konvektion zwischen der Dampfblase und den Wärme übertragenden Wänden ermöglicht lokal sehr hohe Wärmeübergangsraten. Bei hinreichend vielen Dampfblasen kann Flüssigkeit nicht stark überhitzen, da man es praktisch mit einem Zweiphasengemisch zu tun hat. Die Flüssigkeit nimmt die Wärme als Zwischenspeicher durch Erwärmung auf, um sie durch Verdampfung in die nächste Dampfblase wieder abzugeben, die sich in unmittelbarer Nähe des betreffenden Flüssigkeitsvolumenelements vorbeibewegt. Die Flüssigkeit wird dabei durch die aufsteigenden Blasen bis in die unmittelbar an den Wärmetauscherwänden gelegenen Schichten hinein gekühlt und auch noch umgerührt, was für gleichmäßige Verhältnisse im gesamten Verdampfungsraum sorgt. Da die beteiligten Prozesse chaotisch ablaufen, ist das Verfahren ausgesprochen unanfällig gegen Störungen.

Der Abstand zwischen den beheizten Wärmetauscherwänden sollte unter 10 mm bleiben, da der von den deformierten Blasen ausgeübte Druck von der Krümmung der Blasenoberfläche abhängig ist und mit wachsender Blasengröße schnell abnimmt. Da die Blasen durch die Verdampfung anwachsen, ist es zweckmäßig, auch den Abstand zwischen den Heizwänden allmählich zu vergrößern, um übermäßige Verformung der Blasen zu vermeiden, wie dies in den Ansprüchen 10 und 14 angegeben ist.

Spontane Dampfblasenbildung setzt erst mit einer relativ hohen Überhitzung der beheizten Wärmetauscherwände ein. Um die Erfindung im wirtschaftlich interessanten Bereich niedriger Überhitzung zu nutzen, werden gezielte Maßnahmen zur Bereitstellung der Blasen getroffen, wie dies in den Ansprüchen 4 bis 6 und 8 und 9 angegeben ist. Die Dampfblasen werden im unteren Bereich des Verdampfers bereitgestellt; sie stimulieren dann beim Aufsteigen den Wärmeübergang und wachsen durch Verdampfung an.

Die Wechselwirkung zwischen den Dampfblasen und den die Wärme übertragenden Wärmetauscherwänden läßt sich in gleicher Weise bei der Kondensation, wie dies im Anspruch 3 angegeben ist, nutzen. Dies führt zu einer Verdampfungsvorrichtung gemäß Anspruch 9. Hierbei muß gewährleistet werden, daß die Dampfblasen in der Kondensationskammer nicht vollständig kondensieren, da dies mit Implosionen verbunden ist, die die Wärmetauscherwände beschädigen und die Lebensdauer der Vorrichtung verkürzen würden. Eine solche Gefahr läßt sich vermeiden, wenn gemäß Anspruch 6 die Stimulierung des Wärmeübergangs auf der Verdampfungsseite durch eingeimpften Restdampf aus der Kondensationskammer erfolgt. Da in diesem Fall der Restdampf die Wärmeübertragung am Laufen hält, kann der Restdampfstrom nicht durch die Wärmeübertragung zum Erliegen kommen. Das System steuert sich also selbst.

Es ist bekannt, daß Tropfenkondensation zu sehr hohen Wärmeübertragungsraten führt. Tropfenkondensation läßt sich durch geeignete Beschichtung der Wärmetauscherwände erreichen und läßt sich sehr gut mit dem Verfahren nach Anspruch 1 bei einer Vorrichtung nach Anspruch 13 kombinieren. Die Ausbildung der Wärmetauscherwände in Trichterform oder in Form sich nach oben erweiternder Schalen stellt eine besondere Anpassung an die wachsenden Dampfblasen dar, um zu vermeiden, daß diese wachsenden Dampfblasen zu eng beieinanderliegen und zu noch größeren Blasen verschmelzen.

Neben der direkten Dampfblaseneinimpfung nach den Ansprüchen 1 bis 6 und 8 bis 12 lassen sich Dampfblasen auch gemäß den Ansprüchen 7 und 13 bis 17 bei geringer Überhitzung erzeugen. Der Dampf wird dabei in geeigneten Nischen, die ein hinreichendes Dampfvolumen am Aufsteigen hindern, durch Oberflächenverdampfung gebildet, wodurch das Dampfvolumen anwächst, bis sich eine Blase ablöst und zwischen den Wärmetauscherwänden aufsteigt.

Das erfindungsgemäße Verfahren ermöglicht den Bau von Verdampfungswärmetauschern, die bei geringer Überhitzung der beheizten Wärmetauscherwände wesentlich höhere Wärmeübertragungsleistungen ermöglichen als gegenwärtig verfügbare Systeme. Damit finden sich Einsatzbereiche überall da, wo herkömmliche Verdampfungswärmeaustauscher bereits eingesetzt werden und darüber hinaus. Besonders erwähnt seien hier der Einsatz in Meerwasserentsalzungsanlagen, Destillationsanlagen, Anlagen zur Konzentration von Industrieabwässern oder Spülwässern in der Galvanikindustrie, Anlagen zur Eindickung wäßriger Lösungen in der Lebensmittelindustrie, Wärmetauschern zwischen verschiedenen Kühlkreisläufen bei Kraftwerken, in der Kältetechnik und in Receivern für thermische Solarkraftwerke. Darüber hinaus läßt sich das Verfahren bei Verwendung von Luftblasen zum Bau von Verdunstungskühlern heranziehen, die z. B. in der Klimatechnik Verwendung finden können.

Die Erfindung soll nachfolgend anhand der beigefügten Zeichnung näher erläutert werden.

Es zeigen
- Fig. 1: eine schematische Darstellung einer ersten Vorrichtung zur Verdampfungswärmeübertragung,
- Fig. 2: einen Schnitt C-C durch die Vorrichtung nach Fig. 1,
- Fig. 3: eine vergrößerte Darstellung eines Bereiches A der Vorrichtung nach Fig. 1,
- Fig. 4: eine schematische Darstellung einer zweiten Vorrichtung zur Verdampfungswärmeübertragung und
- Fig. 5: eine vergrößerte Darstellung eines Bereiches B der Vorrichtung nach Fig. 4.

Gleiche Bauteile in den Figuren der Zeichnung sind mit den gleichen Bezugszeichen versehen.

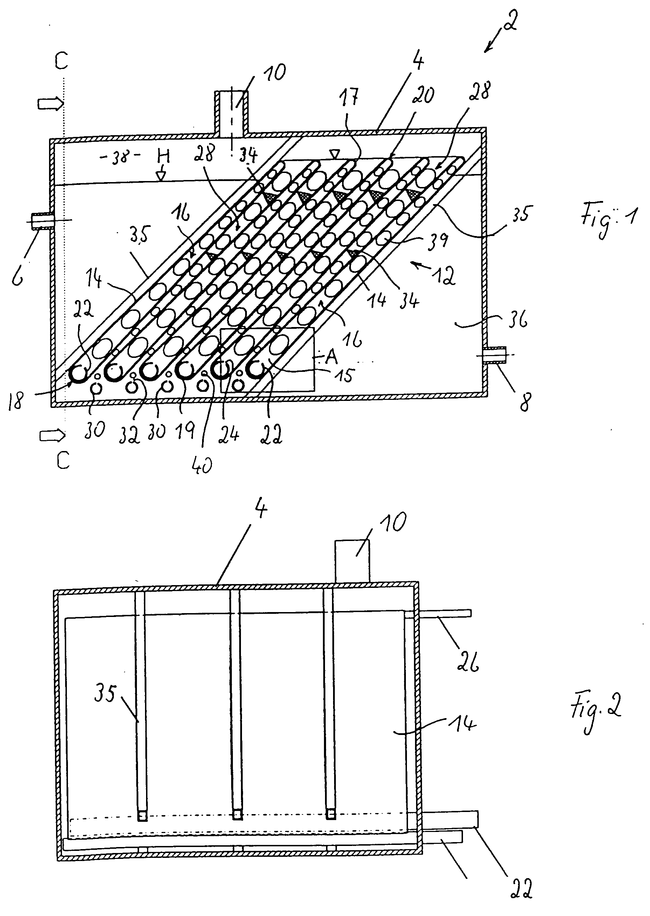

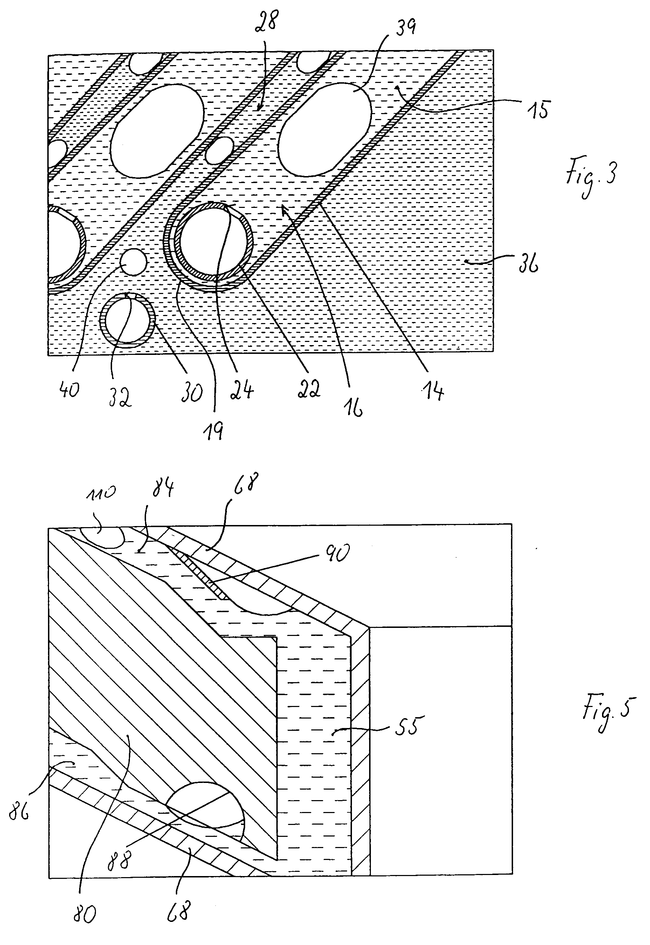

Die Zeichnung zeigt in den Fig. 1 bis 3 eine erste Vorrichtung 2 zur Verdampfungswärmeübertragung mit einem druckfesten Gehäuse 4, das einen Einlaßstutzen 6 für einzudampfende Flüssigkeit, einen Auslaßstutzen 8 für aufkonzentrierte Flüssigkeit und einen Auslaßstutzen 10 für Brüdendampf aufweist.

In dem Gehäuse befindet sich ein Wärmetauscher 12 mit einem Paket aus Wärmetauscherplatten 14, die unter einem Winkel gegen die Horizontale geneigt angeordnet sind und paarweise zusammengefaßt zu geschlossenen, gering beabstandeten Kondensationskammern 16 mit oberen und unteren runden Abschlußwandungen 17, 19 ausgebildet sind. Die Kondensationskammern 16 sind mit Kondensat 15 gefüllt.

In das untere Ende jeder Kondensationskammer ist jeweils ein Einblas-Röhrchen 22 zum Einblasen von Heißdampf eingeführt, das sich über die Länge der Kondensationskammer erstreckt und entlang seiner Länge mit kleinen in den Innenraum der Kondensationskammer zeigenden Bohrungen 24 ausgestattet ist. Aus dem oberen Ende jeder Kondensationskammer 16 führt ein Abführröhrchen 26 für Rest-Heißdampf heraus.

Die zwischen den Kondensationskammern 16 gebildeten Zwischenräume sind als offene Verdampfungskammern 28 ausgebildet. Entlang den unteren Enden der Verdampfungskammern 28 sind jeweils Einimpfröhrchen 30 zum Einimpfen von Dampf angeordnet, die kleine zur Verdampfungskammer 28 hin zeigende Bohrungen 32 aufweisen.

Der Abstand zwischen den Wärmetauscherplatten 14 der Kondensationskammern 16 verringert sich vom unteren Ende 18 bis zum oberen Ende 20, derart, daß ein sich vom unteren Ende bis zum oberen Ende verjüngender Spaltraum gebildet wird. Entsprechend bildet jede Verdampfungskammer 28 einen von unten nach oben weiter werdenden Spaltraum.

Da in den Kondensationskammern 16 ein Überdruck herrscht, werden die Wärmetauscherplattenwände 14 auf der Verdampferseite durch Stützkörper 34 bestimmter Höhe abgestützt. Die äußeren Kondensationskammern 16 werden durch Rippen 35 gegen das Gehäuse 4 abgestützt.

Der Raum zwischen den Kondensationskammern 16, also der Verdampfungsraum 28, ist mit einzudampfender Flüssigkeit 36 gefüllt, die das gesamte Gehäuse 4 bis zur Höhe H ausfüllt. Darüber befindet sich ein Brüden-Dampfraum 38.

Die Vorrichtung 2 arbeitet wie folgt: Heißdampf wird in die Kondensationskammern durch die Röhrchen 22 über deren Bohrungen 24 eingeblasen. Der Durchmesser der Bohrungen ist so gewählt, daß die heraustretenden Heißdampfblasen 39 einen Durchmesser aufweisen, der etwas größer ist als die Weite der Kondensationskammer an dieser Einblasstelle. Beim Aufsteigen in der Kondensationskammer deformieren sich die Blasen daher und schmiegen sich an die Wärmetauscherflächen an und erzeugen einen dünnen Flüssigkeitsfilm mit gutem Wärmeübertragungsverhalten. Der verbleibende Rest-Heißdampf wird am oberen Ende der Kondensationskammer über die Röhrchen 26 seitlich abgeführt, wobei das anfallende Kondensat mit überschwappt und ebenfalls über die Röhrchen abgeführt wird. Das Kondensat wird abgetrennt, während der Restdampf über die Einimpfröhrchen 30 und deren Bohrungen 32 in die Verdampfungskammern eingeimpft wird. Die in die Verdampfungskammer eingeimpften Dampfblasen 40 steigen zwischen den Wärmetauscherwänden auf, stimulieren den Wärmeübergang und wachsen durch Aufnahme von Brüdendampf an. Die durch Brüdendampf angewachsenen Restdampfblasen gelangen in den Brüden-Dampfraum 38 und werden über den Auslaßstutzen 10 abgeführt. Es ist auch möglich, anderweitig erzeugten Dampf den Einimpfröhrchen 30 zuzuführen.

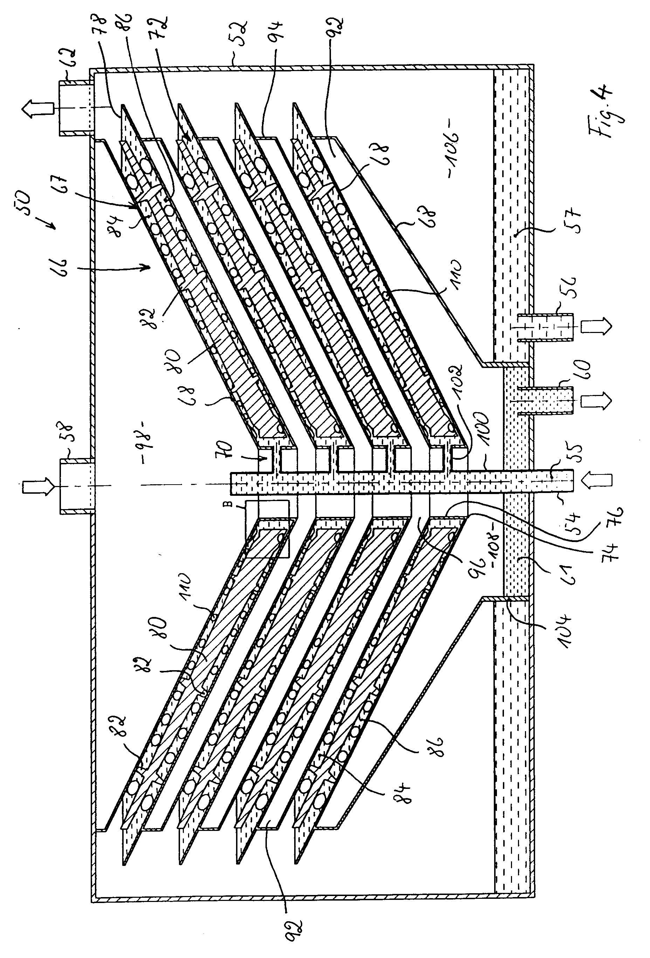

Die Zeichnung zeigt in den Fig. 4 und 5 eine zweite Vorrichtung 50 zur Verdampfungswärmeübertragung mit einem druckfesten Gehäuse 52, das einen Einlaßstutzen 54 für einzudampfende Flüssigkeit 55, einen Auslaßstutzen 56 für aufkonzentrierte Flüssigkeit 57, einen Einlaßstutzen 58 für Heißdampf, einen Auslaßstutzen 60 für Kondensat 61 und einen Auslaßstutzen 62 für Brüdendampf aufweist.

In dem Gehäuse 52 befindet sich ein Wärmetauscher 66 mit einem Paket 67 aus trichterförmig oder schalenförmig übereinander angeordneten, beabstandeten Wärmetauscherwänden 68 mit zentraler Öffnung 70. Benachbarte Wärmetauscherwände 68 sind paarweise zusammengefaßt zu Verdampfungsräumen 72 ausgebildet, deren untere, innere Enden 74 durch eine ringförmige Abschlußwand 76 verbunden sind und deren obere, äußere Enden 78 offen sind.

In den Verdampfungsräumen 72 sind trichterförmige oder schalenförmige Zwischenwände 80 angeordnet, die beidseitig integrierte Abstützelemente 82 aufweisen, mit denen sich die Zwischenwand an den benachbarten Wärmetauscherwänden 68 abstützt. Die Zwischenwände sind so ausgebildet, daß sich der Abstand zwischen den Zwischenwänden 80 und den Wärmetauscherwänden 68 von unten nach oben vergrößert oder anders ausgedrückt, daß sich die Stärke der Zwischenwände von unten nach oben verringert, derart, daß unter- und oberhalb der Zwischenwände 80 Spalträume 84, 86 mit von unten nach oben zunehmender Breite gebildet werden.

Am unteren Ende weist jede Zwischenwand unterseitig Ausnehmungen oder Hohlräume 88 auf zur Erzeugung von Dampfblasen. Die jeweils oberhalb der Zwischenwand befindliche Wärmetauscherwand 68 weist im Bereich des unteren Endes der Zwischenwand schräg nach unten in den Spaltraum ragende Zungen 90 zur Erzeugung von Dampfblasen auf der Oberseite der Zwischenwand auf.

Die Räume zwischen den Verdampfungsräumen 72 sind als Kondensationsräume 92 ausgebildet, die am oberen Ende 94 geschlossen sind und über ihre unteren offenen Enden 96 und die zentrale Öffnung 70 mit einem Heißdampfraum 98 in Verbindung stehen, der über den Einlaßstutzen 58 mit Heißdampf beschickt wird.

Der Einlaßstutzen 54 für einzudampfende Flüssigkeit führt in ein oben geschlossenes, durch die zentralen Öffnungen 70 hindurchgeführtes Steigrohr 100, das über seitliche, in die unteren Abschlußwände 76 führende Rohre 102 mit den Verdampfungsräumen 72 in Verbindung steht.

Die obere Wärmetauscherwand des obersten Verdampfungsraumes 72 ist mit dem Gehäuse 52 verbunden und begrenzt den Heißdampfraum 98 nach unten.

Die unterste Wärmetauscherwand des untersten Kondensationsraumes 92 ist über eine zylindrische, das Steigrohr 100 umgebende Wand 104 mit dem Boden des Gehäuses 52 verbunden. Die Wand 104 trennt eine Ringkammer 106 für aufkonzentrierte Flüssigkeit 57, die den Auslaßstutzen 56 und den Brüdendampf-Auslaßstutzen 62 aufweist, von einer zentralen, das Steigrohr umgebenden Kammer 108 für Kondensat, die den Auslaßstutzen 60 aufweist.

Die Vorrichtung 50 arbeitet wie folgt: Die Verdampfungsräume 72 werden über den Einlaßstutzen 54 und das Steigrohr 55 mit der einzudampfenden Flüssigkeit bei ständigem Durchlauf beschickt. Dabei sorgt ein von unten nach oben sinkender Strömungswiderstand in den verschieden gewählten Rohren 102 dafür, daß alle Verdampfungsrohre gefüllt werden. Über den Einlaßstutzen 58 wird Heißdampf in die Kondensationskammern 92 eingeleitet. Der Heißdampf überträgt dabei Wärme über die Wärmetauscherwände 68 auf die in den Verdampfungsräumen 72 befindliche Flüssigkeit und kondensiert dabei. Das entstehende Kondensat fließt nach unten zentral ab und sammelt sich in der Kammer 108, aus der es über den Stutzen 60 abgelassen werden kann.

Durch die am unteren Ende der Zwischenwände 80 auf deren Unterseite ausgebildeten Ausnehmungen oder Hohlräume 88 und durch die gegenüberliegend vorgesehenen Lippen 90 der oberen Wärmetauscherwand wird eine Flüssigkeitsoberfläche für die Verdampfung zur Verfügung gestellt, indem eine Mindestdampfmenge in unmittelbarer Nähe der beheizten Wärmetauscherwände zurückgehalten wird. Durch diese Ausbildung wird diese Mindestdampfmenge am Aufsteigen gehindert. Aus dieser Mindestdampfmenge lösen sich dann ständig kleine Dampfblasen 110 ab, die in den Spalträumen schräg nach oben aufsteigen und durch ständige Aufnahme von weiterem Brüdendampf wachsen. Diese Brüdendampfblasen treten am oberen Ende der Verdampfungskammern aus und werden über den Auslaßstutzen 62 abgeführt. Dabei schwappt aufkonzentrierte bzw. eingedampfte Flüssigkeit mit über, die sich in der Kammer 106 ansammelt und über den Auslaßtstutzen 56 abgezogen werden kann.

## Patentansprüche

1. Verfahren zur Verdampfungswärmeübertragung in einem Wärmetauscher unter Verwendung von Dampfblasen, **gekennzeichnet durch** folgende Verfahrensschritte:
- Einführung von Dampfblasen in wenigstens eine zwischen Wärme übertragenden, beheizten Wärmetauscherwänden gebildete, unter einem Winkel gegen die Horizontale angeordnete, mit einer einzudampfenden Flüssigkeit gefüllte Verdampfungskammer,
- Aufsteigenlassen der Dampfblasen in der Verdampfungskammer,
- Deformieren der aufsteigenden Dampfblasen zwischen den Wärmetauscherwänden zur Bildung eines dünnen Flüssigkeitsfilms zwischen den Dampfblasen und den die Wärme übertragenden Wärmetauscherwänden und
- Abführen der durch Brüdendampf angewachsenen Dampfblasen zur weiteren Verwendung.

2. Verfahren nach Anspruch 1, **dadurch gekennzeichnet**, daß die Wärmetauscherwände mit kondensierendem Heißdampf beheizt werden.

3. Verfahren nach Anspruch 1 oder 2, **gekennzeichnet durch** folgende weitere Verfahrensschritte:
- Einführen von Heißdampf in Form von Blasen in von den Wärmetauscherwänden der Verdampfungskammern begrenzte, mit Kondensat gefüllte Kondensationskammern,
- Aufsteigenlassen der Heißdampfblasen in den Kondensationskammern,
- Deformieren der Heißdampfblasen zwischen den Wärmetauscherwänden zur Bildung eines dünnen Kondensatfilms zwischen den Heißdampfblasen und den Wärmetauscherwänden und
- Abführen der Rest-Heißdampfblasen.

4. Verfahren nach einem der vorhergehenden Ansprüche, **dadurch gekennzeichnet**, daß die Dampfblasen am unteren Ende der Verdampfungskammern eingeblasen oder erzeugt werden.

5. Verfahren nach einem der Ansprüche 1 bis 4, **dadurch gekennzeichnet**, daß die Dampfblasen und die Heißdampfblasen bei der Einführung auf einen Durchmesser eingestellt werden, der etwas größer ist als der Abstand zwischen den Wärmetauscherwänden an der Stelle der Blaseneinführung.

6. Verfahren nach Anspruch 1 und 3, **dadurch gekennzeichnet**, daß der aus den Kondensationskammern abgeführte Rest-Heißdampf in die Verdampfungskammern in Form von Dampfblasen eingeführt wird.

7. Verfahren nach Anspruch 4, **dadurch gekennzeichnet**, daß zur Erzeugung der Dampfblasen am unteren Ende der Verdampfungskammer eine Flüssigkeitsoberfläche für die Verdampfung zur Verfügung gestellt wird, indem eine Mindestdampfmenge in unmittelbarer Nähe der beheizten Wärmetauscherwände zurückgehalten wird, aus der sich Dampfblasen ablösen.

8. Vorrichtung zur Durchführung des Verfahrens nach einem der vorhergehenden Ansprüche mit einem in einem Gehäuse (4) angeordneten Paket aus Wärmetauscherwände (14) bildenden, beabstandeten Platten, wobei das Gehäuse einen Einlaßstutzen (6) für einzudampfende Flüssigkeit und einen Auslaßstutzen (8) für aufkonzentrierte Flüssigkeit aufweist, **dadurch gekennzeichnet**, daß
- die Wärmetauscherwände (14) beheizbar sind, unter einem Winkel gegen die Horizontale angeordnet sind und unten und oben offen ausgebildete Verdampfungsräume (28) begrenzen, die in einem mit einzudampfender Flüssigkeit gefüllten Raum des Gehäuses (4) angeordnet sind,
- im Bereich der unteren Enden der Verdampfungsräume (28) sich über die Länge der Verdampfungsräume erstreckende Einimpf-Röhrchen (30) angeordnet sind, die kleine, in die Verdampfungsräume zeigende Bohrungen (32) aufweisen, über die Dampfblasen in die Verdampfungsräume einimpfbar sind, deren Durchmesser etwas größer ist als die Abstände der Wärmeübertragungswände an der Stelle des Einimpfens, und
- die oberen offenen Enden der Verdampfungsräume mit einem mit einem Auslaß (10) versehenen Brüdendampfraum in Verbindung stehen.

9. Vorrichtung nach Anspruch 8, **dadurch gekennzeichnet**, daß
- die Wärmetauscherwände (14) paarweise zusammengefaßt zu wenigstens einer geschlossenen Kondensationskammer (16) ausgebildet sind, die mit einer ersten Flüssigkeit (Kondensat) gefüllt sind,
- die beabstandeten Kondensationskammern (16) die Verdampfungskammern (28) begrenzen,
- an das untere Ende jeder Kondensationskammer (16) ein sich über die Länge der Kondensationskammern erstreckendes Einblas-Röhrchen (22) angeschlossen ist, das entlang seiner Länge mit mehreren kleinen Bohrungen (24) versehen ist, die zur Kondensationskammer hin zeigen und über die Heißdampfblasen in die Kondensationskammer einblasbar sind, deren Durchmesser etwas größer ist als der Abstand der Wärmeübertragungswände an der Stelle der Einblasung, welche sich beim Aufsteigen in der Kondensationskammer unter Abgabe von Wärme an die Wärmeübertragungswände und damit an die Verdampfungsräume verkleinern, und
- an die oberen Enden der Kondensationskammern (16) Abfuhr-Röhrchen (26) zum Abführen von Rest-Heißdampf und überschüssigem Kondensat angeschlossen sind.

10. Vorrichtung nach Anspruch 8 und 9, **dadurch gekennzeichnet**, daß sich der Abstand zwischen den Wärmetauscherwänden (14) der Verdampfungsräume (28) von unten nach oben vergrößert und sich entsprechend der Abstand der Wärmeübertragungswande (14) der Kondensationskammern (16) von unten nach oben verkleinert.

11. Vorrichtung nach Anspruch 8 und 9, **dadurch gekennzeichnet**, daß die Abfuhr-Röhrchen (26) der Kondensationskammern (16) an die Einimpf-Röhrchen (30) der Verdampfungsräume (28) angeschlossen sind unter Zwischenschaltung einer Einrichtung zur Kondensatabtrennung.

12. Vorrichtung zur Durchführung des Verfahrens nach einem der Ansprüche 1 bis 7 mit einem Gehäuse (52), das ein Paket aus beabstandeten Wärmetauscherwänden (68), einen Einlaßstutzen für einzudampfende Flüssigkeit und einen Auslaßstutzen (56) für aufkonzentrierte Flüssigkeit aufweist, **dadurch gekennzeichnet**, daß
- die Wärmetauscherwände (68) trichterförmig oder schalenförmig ausgebildet sind und eine zentrale Öffnung (70) aufweisen,
- benachbarte Wärmetauscherwände (68) paarweise zusammengefaßt zu Verdampfungskammern (72) ausgebildet sind, die am unteren Ende durch eine die Wärmetauscherwände verbindende Ringwand (76) abgeschlossen sind und am oberen äußeren Ende offen sind und mit einem Außlaß für Brüdendampf in Verbindung stehen,
- die Verdampfungskammern (72) über in die Ringwände (76) mündende Rohre (102) mit einem die zentrale Öffnung (70) durchsetzenden Rohr (100) in Verbindung stehen, über das einzudampfende Flüssigkeit den Verdampfungskammern zuführbar ist,
- in den Verdampfungskammern (72) jeweils eine trichterförmige oder schalenförmige Zwischenwand (80) angeordnet ist, die sich über Abstützelemente an den beiderseitigen Wärmeübertragungswänden abstützt, so daß oberhalb und unterhalb der Zwischenwand (80) Spalträume (84, 86) gebildet werden,
- die Zwischenwände (80) am unteren Ende unterseitig jeweils eine Ausnehmung oder Aushöhlung (88) und die oberhalb der Zwischenwände (80) angeordneten Wärmeübertragungswände im Bereich des unteren Endes der Zwischenwände jeweils schräg nach unten in den Spaltraum (84) weisende Zungen (90) aufweisen zur Erzeugung von Dampfblasen,
- die trichter- oder schalenförmigen Räume zwischen den Verdampfungsräumen (72) als Kondensationsräume (92) ausgebildet sind, deren obere äußere Enden geschlossen und deren untere innere Enden offen ausgebildet sind, wobei über die unteren offenen Enden Heißdampf in die Kondensationsräume (92) einblasbar ist, und
- die Wärmetauscherwände der Kondensationsräume mit einer hydrophoben Beschichtung versehen sind oder dem Heißdampf geringe Mengen geeigneter, sich auf die Wärmetauscherwände niederschlagender hydrophober Substanzen beigemischt werden zur Erzielung einer Tropfenkondensation.

13. Vorrichtung nach Anspruch 12, **dadurch gekennzeichnet**, daß die Zwischenwände (80) eine von unten nach oben abnehmende Stärke aufweisen, derart, daß die Spalträume (84, 86) von unten nach oben weiter werden.

14. Vorrichtung nach Anspruch 12, **dadurch gekennzeichnet**, daß die oberen offenen Enden der Verdampfungskammern (72) in einen Ringraum (106) zur Aufnahme von aufkonzentrierter Flüssigkeit münden, der einen Auslaßstutzen (62) zum Ableiten von Brüdendampf und einen Ablaßstutzen (56) für aufkonzentrierte Flüssigkeit aufweist.

15. Vorrichtung nach Anspruch 12, **dadurch gekennzeichnet**, daß die obere Wärmeübertragungswand des obersten Verdampfungsraumes oberendig mit dem Gehäuse (52) verbunden ist und einen Heißdampfraum (98) mit Einlaßstutzen (58) für Heißdampf nach unten begrenzt.

16. Vorrichtung nach Anspruch 12 und 14, **dadurch gekennzeichnet**, daß die untere trichter- oder schalenförmige Wand des untersten Kondensationsraumes (92) mit dem Gehäuseboden verbunden ist und den Ringraum (106) von einem zentralen Raum (108) trennt, welcher mit den Kondensationsräumen (92) zum Sammeln von Kondensat in Verbindung steht und einen Auslaßstutzen (60) für Kondensat aufweist.

## Claims

1. A method for the transfer of evaporation heat in a heat exchanger with the use of vapour bubbles, **characterised by** the following method steps:
- introduction of vapour bubbles into at least one evaporating chamber which is formed between heated heat exchanger walls which transfer heat, are disposed at an angle to the horizontal and are filled with a liquid to be evaporated,
- allowing the vapour bubbles to rise in the evaporating chamber,
- deformation of the rising vapour bubbles between the heat exchanger walls to form a thin film of liquid between the vapour bubbles and the heat exchanger walls transferring the heat and
- removal of the vapour bubbles accumulating by exhaust vapour for further use.

2. A method according to Claim 1,
**characterised in that** the heat exchanger walls are heated with condensing hot vapour.

3. A method according to Claim 1 or 2,
**characterised by** the following further method steps:
- introduction of hot vapour in the form of bubbles into condensation chambers which are limited by the heat exchanger walls of the evaporating chambers and are filled with condensate,
- allowing the hot vapour bubbles to rise in the condensation chambers,
- deformation of the hot vapour bubbles between the heat exchanger walls to form a thin film of condensate between the hot vapour bubbles and the heat exchanger walls and
- removal of the remaining hot vapour bubbles.

4. A method according to one of the preceding Claims,
**characterized in that** the vapour bubbles are blown in or produced at the lower end of the evaporating chambers.

5. A method according to one of Claims 1 to 4,
**characterized in that** the vapour bubbles and the hot vapour bubbles are adjusted during introduction to a diameter which is slightly larger than the distance between the heat exchanger walls at the site of the introduction of the bubbles.

6. A method according to Claim 1 and 3,
**characterized in that** the residual hot vapour carried away from the condensation chambers is introduced into the evaporating chambers in the form of vapour bubbles.

7. A method according to Claim 4,
**characterized in that** to produce the vapour bubbles at the lower end of the evaporating chamber a liquid surface is made available for the evaporation by a minimum amount of vapour being retained in the direct vicinity of the heated heat exchanger walls, from which vapour bubbles become detached.

8. A device for performing the method according to one of the preceding Claims, having a packet of spaced plates forming heat exchanger walls (14) which is disposed in a housing (4), wherein the housing comprises an inlet connection piece (6) for liquid to be evaporated and an outlet connection piece (8) for concentrated liquid, **characterised in that**
- the heat exchanger walls (14) can be heated, are disposed at an angle to the horizontal and limit evaporating chambers (28) open at the bottom and at the top, which are disposed in a chamber of the housing (4) filled with liquid to be evaporated,
- disposed in the region of the lower ends of the evaporating chambers (28) are injection pipes (30) extending over the length of the evaporating chambers, which have small bores (32) pointing into the evaporating chambers, via which vapour bubbles can be injected into the evaporating chambers, the diameter of which is slightly larger than the distances between the heat transfer walls at the site of injection, and
- the upper open ends of the evaporating chambers communicate with an exhaust vapour chamber provided with an outlet (10).

9. A device according to Claim 8,
**characterized in that**
- the heat exchanger walls (14) are combined in pairs to form at least one closed condensation chamber (16), which are filled with a first liquid (condensate),
- the spaced condensation chambers (16) limit the evaporating chambers (28),
- connected to the lower end of each condensation chamber (16) is a blowing-in pipe (22) extending over the length of the condensation chambers, which along its length is provided with several small bores (24), which point to the condensation chamber and via which hot vapour bubbles can be blown into the condensation chamber, the diameter of which is slightly larger than the distance between the heat transfer walls at the site of the blowing-in, which bubbles become smaller as they rise in the condensation chamber with the emission of heat to the heat transfer walls and consequently to the evaporating chambers, and
- connected to the upper ends of the condensation chambers (16) are discharge pipes (26) to discharge residual hot vapour and excess condensate.

10. A device according to Claim 8 and 9,
**characterized in that** the distance between the heat exchanger walls (14) of the evaporating chambers (28) increases from the bottom to the top and accordingly the distance between the heat exchanger walls (14) of the condensation chambers (16) decreases from the bottom to the top.

11. A device according to Claim 8 and 9,
**characterised in that** the discharge pipes (26) of the condensation chambers (16) are connected to the injection pipes (30) of the evaporating chambers (28) with the interposition of a device for the separation of condensate.

12. A device for performing the method according to one of Claims 1 to 7 having a housing (52) which comprises a packet of spaced heat exchanger walls (68), an inlet connection piece for liquid to be evaporated and an outlet connection piece (56) for concentrated liquid,
**characterised in that**
- the heat exchanger walls (68) have a funnel-shaped or dish-shaped construction and have a central aperture (70),
- adjacent heat exchanger walls (68) are constructed combined in pairs to form evaporating chambers (72), which are closed at the lower end by an annular wall (76) connecting the heat exchanger walls and are open at the upper outer end and communicate with an outlet for exhaust vapours,
- the evaporating chambers (72) communicate via pipes (102) opening into the annular walls (76) with a pipe (100) passing through the central aperture (70), via which liquid to be evaporated can be supplied to the evaporating chambers,
- disposed in each of the evaporating chambers (72) is a funnel-shaped or dish-shaped partition (80), which is supported via support elements on the heat transfer walls on either side, so that above and below the partition (80) gaps (84, 86) are formed,
- the partitions (80) at the lower end in each case comprise a recess or a hollow (88) on the underside and the heat exchanger walls disposed above the partitions (80) have, in the region of the lower end of the partitions, tongues (90) pointing obliquely downwards into the gap (84) for the production of vapour bubbles,
- the funnel-shaped or dish-shaped chambers between the evaporating chambers (72) are constructed as condensation chambers (92), the upper outer ends of which have a closed construction and the lower inner ends of which have an open construction, with it being possible to blow hot vapour into the condensation chambers (92) via the lower open ends, and
- the heat exchanger walls of the condensation chambers are provided with a hydrophobic coating or small amounts of suitable hydrophobic substances which condense on the heat exchanger walls are added to the hot vapour to achieve dropwise condensation.

13. A device according to Claim 12,
**characterized in that** the partitions (80) have a thickness which decreases from the bottom to the top in such a manner that the gaps (84, 86) become wider from the bottom to the top.

14. A device according to Claim 12,
**characterized in that** the upper open ends of the evaporating chambers (72) open into a annular space (106) for receiving concentrated liquid, which comprises an outlet connection piece (62) for letting off the exhaust vapours and an outlet connection piece (56) for concentrated liquid.

15. A device according to Claim 12,
**characterised in that** the upper heat transfer wall of the uppermost evaporation chamber is connected at the upper end to the housing (52) and at the bottom limits a hot vapour chamber (98) having an inlet connection piece (58) for hot vapour.

16. A device according to Claim 12 and 14,
**characterised in that** the lower funnel-shaped or dish-shaped wall of the lowest condensation chamber (92) is connected to the housing base and separates the annular space (106) from a central chamber (108), which communicates with the condensation chambers (92) for collecting condensate and comprises an outlet connection piece (60) for condensate.

## Revendications

1. Procédé de transfert de chaleur de vaporisation dans un échangeur de chaleur avec utilisation de bulles de vapeur, caractérisé par les étapes de procédé suivantes :
- introduction de bulles de vapeur dans au moins une chambre de vaporisation formée entre des parois d'échangeurs de chaleur chauffées, transférant la chaleur, disposée selon un angle par rapport à l'horizontale, remplie d'un fluide à vaporiser,
- jaillissement des bulles de vapeur dans la chambre de vaporisation,
- déformation des bulles de vapeur jaillissantes entre les parois d'échangeurs de chaleur pour former un film mince de fluide entre les bulles de vapeur et les parois d'échangeurs de chaleur transférant la chaleur et
- évacuation des bulles de vapeur, augmentées par la vapeur chaude, pour utilisation ultérieure.

2. Procédé selon la revendication 1,
caractérisé en ce que les parois d'échangeurs de chaleur sont chauffées par de la vapeur surchauffée se condensant.

3. Procédé selon la revendication 1 ou 2,
caractérisé par les étapes de procédé supplémentaires suivantes :
- introduction de vapeur surchauffée sous forme de bulles dans des chambres de condensation, délimitées par les parois d'échangeurs de chaleur des chambres de vaporisation, remplies de condensat,
- jaillissement des bulles de vapeur surchauffée dans les chambres de condensation,
- déformation des bulles de vapeur surchauffée entre les parois d'échangeurs de chaleur pour former un film mince de condensat entre les bulles de vapeur surchauffée et les parois d'échangeurs de chaleur et
- évacuation des bulles de vapeur surchauffée résiduaires.

4. Procédé selon l'une des revendications précédentes,
caractérisé en ce que les bulles de vapeur sont insufflées ou générées à l'extrémité inférieure des chambres de vaporisation.

5. Procédé selon l'une des revendications 1 à 4,
caractérisé en ce que les bulles de vapeur et les bulles de vapeur surchauffée sont réglées, lors de l'introduction, à un diamètre qui est sensiblement plus grand que l'écartement entre les parois d'échangeurs de chaleur à l'emplacement d'introduction des bulles.

6. Procédé selon les revendications 1 et 3,
caractérisé en ce que la vapeur surchauffée résiduaire évacuée hors des chambres de condensation est introduite dans les chambres de vaporisation sous forme de bulles de vapeur.

7. Procédé selon la revendication 4,
caractérisé en ce que, pour générer les bulles de vapeur à l'extrémité inférieure de la chambre de vaporisation on met à disposition une surface de fluide pour la vaporisation grâce au fait qu'une quantité minimale de vapeur est retenue au voisinage immédiat des parois d'échangeurs de chaleur chauffées, de laquelle se détachent des bulles de vapeur.

8. Disposition pour la mise en oeuvre du procédé selon l'une des revendications précédentes, avec un empilage de plaques écartées, formant des parois (14) d'échangeurs de chaleur, disposées dans un carter (4), le carter présentant une tubulure d'entrée (6) pour du fluide à vaporiser et une tubulure de sortie (8) pour du fluide concentré, caractérisé en ce que
- les parois (14) d'échangeurs de chaleur peuvent être chauffées, sont disposées selon un angle par rapport à l'horizontale et délimitent des volumes de vaporisation (28) formés fermés au-dessous et au-dessus, qui sont disposés dans un volume du carter (4) rempli de fluide à vaporiser,
- des petits tubes d'inoculation (30) s'étendant sur la longueur des volumes de vaporisation, qui présentent des petits perçages (32) débouchant dans les volumes de vaporisation, par lesquels des bulles de vapeur peuvent être inoculées dans les volumes de vaporisation, dont le diamètre est un peu plus grand que les écartements des parois de transfert de chaleur à l'emplacement d'inoculation, sont disposés dans la zone des extrémités inférieures des volumes de vaporisation (28) et
- les extrémités supérieures ouvertes des volumes de vaporisation sont en liaison avec un volume de vapeur chaude muni d'une sortie (10).

9. Dispositif selon la revendication 8,
caractérisé en ce que,
- les parois d'échangeurs de chaleur (14) sont réalisées réunies par paires en au moins une chambre de condensation (16) fermée qui est remplie d'un premier fluide (condensat),
- les chambres de condensation (16) écartées délimitent les chambres de vaporisation (28),
- à l'extrémité inférieure de chaque chambre de condensation (16) est raccordé un petit tube d'insufflation (22) s'étendant sur la longueur des chambres de condensation, qui est muni le long de sa longueur de plusieurs petits perçages (24) qui apparaissent en direction de la chambre de condensation et par lesquels des bulles de vapeur surchauffée peuvent être insufflées dans la chambre de condensation, dont le diamètre est un peu plus grand que l'écartement des parois de transfert de chaleur à l'emplacement d'insufflation, qui se rétrécissent lors du jaillissement dans la chambre de condensation avec dégagement de chaleur aux parois de transfert de chaleur et, de ce fait, aux volumes de vaporisation, et
- des petits tubes d'évacuation (26) sont raccordés aux extrémités supérieures des chambres de condensation (16) pour l'évacuation de la vapeur surchauffée résiduaire et du condensat en excès.

10. Dispositif selon les revendications 8 et 9,
caractérisé en ce que l'écartement entre les parois d'échangeurs de chaleur (14) des volumes de vaporisation (28) augmente du bas vers le haut et l'écartement des parois de transfert de chaleur (14) des chambres de condensation (16) diminue en correspondance du bas vers le haut.

11. Dispositif selon les revendications 8 et 9,
caractérisé en ce que les petits tubes d'évacuation (26) des chambres de condensation (16) sont raccordés aux petits tubes d'inoculation (30) des volumes de vaporisation (28) avec intercalage d'un dispositif de séparation du condensat.

12. Dispositif pour la mise en oeuvre du procédé selon l'une des revendications 1 à 7, avec un carter (52) qui présente un empilage de parois d'échangeurs de chaleur (68) écartées, une tubulure d'entrée pour un liquide à vaporiser et une tubulure de sortie (56) pour du fluide concentré, caractérisé en ce que,
- les parois d'échangeurs de chaleur (68) sont réalisées en forme d'entonnoir ou en forme de cuvette et présentent une ouverture centrale (70),
- les parois d'échangeurs de chaleur (68) adjacentes sont réalisées réunies par paires en des chambres de vaporisation (72) qui sont fermées à l'extrémité inférieure par une paroi annulaire (76) reliant les parois d'échangeurs de chaleur et sont ouvertes à l'extrémité supérieure extérieure et sont en liaison avec une sortie pour la vapeur chaude,
- les chambres de vaporisation (72) sont en liaison, par l'intermédiaire de tubes (102) débouchant dans les parois annulaires (76), avec un tube (100) traversant l'ouverture centrale (70), par lequel le fluide à vaporiser peut être amené aux chambres de vaporisation,
- dans les chambres de vaporisation (72) est disposée respectivement une paroi intermédiaire (80) en forme d'entonnoir ou en forme de cuvette, qui s'appuie aux parois de transfert de chaleur des deux côtés par l'intermédiaire d'éléments d'appui, de telle sorte que des volumes de fente (84, 86) sont formés au-dessus et au-dessous de la paroi intermédiaire (80),
- les parois intermédiaires (80) présentent à l'extrémité inférieure, vers le bas, respectivement un évidement ou un creux (88) et les parois de transfert de chaleur disposées au-dessus des parois intermédiaires (80) présentent, dans la zone de l'extrémité inférieure des parois intermédiaires, respectivement des languettes (90) dirigées, inclinées vers le bas, dans le volume de fente (84) pour la génération de bulles de vapeur,
- les volumes en forme d'entonnoir ou de cuvette entre les volumes de vaporisation (72) sont réalisés sous forme de volumes de condensation (92) dont les extrémités supérieures extérieures sont réalisées fermées et dont les extrémités inférieures intérieures sont réalisées ouverte, grâce à quoi de la vapeur surchauffée peut être insufflée dans les volumes de condensation (92) par l'intermédiaire des extrémités inférieures ouverte, et
- les parois d'échangeurs de chaleur des volumes de condensation sont munies d'un revêtement hydrophobe ou bien de faibles quantités de substances hydrophobes condensables sur les parois d'échangeurs de chaleur sont mélangées à la vapeur surchauffée pour obtenir une condensation en gouttes.

13. Dispositif selon la revendication 12,
caractérisé en ce que les parois intermédiaires (80) présentent une épaisseur diminuant du bas vers le haut de telle sorte que les volumes de fente (84, 86) s'élargissent du bas vers le haut.

14. Dispositif selon la revendication 12,
caractérisé en ce que les extrémités supérieures ouvertes des chambres de vaporisation (72) débouchent dans un volume annulaire (106) de réception de fluide concentré qui présente une tubulure de sortie (62) pour l'évacuation de vapeur chaude et une tubulure de sortie (56) pour le fluide concentré.

15. Dispositif selon la revendication 12,
caractérisé en ce que la paroi de transfert de chaleur supérieure du volume de vaporisation le plus haut est reliée à l'extrémité supérieure au carter (52) et délimite vers le bas un volume de vapeur surchauffée (98) avec une tubulure d'entrée (58) pour de la vapeur surchauffée.

16. Dispositif selon les revendications 12 et 14,
caractérisé en ce que la paroi inférieure en forme d'entonnoir ou de cuvette du volume de condensation (92) le plus bas est reliée au fond du carter et sépare le volume annulaire (106) d'avec un volume central (108) qui est en liaison avec les volumes de condensation (92) pour recueillir le condensat et présente une tubulure de sortie (60) pour le condensat.
